# EUROPEAN PATENT APPLICATION

(11) **EP 3 136 190 A1**
(43) Date of publication of application: **01.03.2017**
(21) Application number: 15275190.5
(22) Date of filing: 26.08.2015
(51) Int. Cl.: G04G 7/00, G01S 13/86

(54) **TIME CODE DISPLAY**

(71) Applicant: BAE Systems PLC, London SW1Y 5AD (GB)
(72) Inventor: The designation of the inventor has not yet been filed
(74) Representative: BAE SYSTEMS plc Group IP Department

(57) **Abstract**

Disclosed is apparatus and a method for displaying a time code, said time code being used for measuring the image processing latency of a multi-spectral imaging system as used for aerial imaging from an aircraft (102). The apparatus comprises: a plurality of reflectors (502), each reflector (502) being configured to reflect an incident signal (907, 908), each reflector (502) being switchable between a first state and a second state; and a controller (108) configured to receive time code information and control the reflectors (502) using the received time code information. In its first state, each reflector (502) has a first orientation such that an incident signal (907, 908) is reflected in a first direction. In its second state, each reflector (502) has a second orientation such that an incident signal (907, 908) is reflected in a second direction, the second orientation being different to the first orientation such that the second direction is different to the first direction.

## Description

### FIELD OF THE INVENTION

The present invention relates to the displaying of time codes.

### BACKGROUND

Many modern electronic imaging devices are connected to computers that control the imaging device to capture images, and also record and display the image frames.

Timing information, such as a time-stamp, is generally applied to each image frame by the computer.

When imaging a dynamic object or scene, it tends to be important that the captured images can be accurately correlated with other data. Thus, having accurate timing information associated with captured images tends to be important.

For example, when imaging an aircraft, it may be desirable to compare the captured images of the aircraft with recorded aircraft data. Having accurate time-stamps applied to the captured images tends to be important so that a captured image can be correctly associated with aircraft data recorded at the same instant in time that the image was captured.

Also for example, when capturing images in multiple imaging spectra, having accurate time-stamps applied to the captured images tends to be important to ensure that comparisons between images in different spectra are made between images taken at the same instant in time.

### SUMMARY OF THE INVENTION

The present inventors have realised that many image sensors perform "in-sensor" image processing prior to the captured image being relayed to computer that applies a time-stamp to that image. Thus, time-stamps applied to images tend to have a latency error due to the in-sensor processing. The present inventors have further realised that limitations of the device(s) that transfer captured images from the image sensor to the computer, and the speed/response time of the computer may also contribute to latency errors.

The present inventors have realised that determining latency values, and correcting time-stamps to account for these latency values, would be beneficial, especially when imaging dynamic targets and/or imaging in multiple different spectra.

In a first aspect, the present invention provides apparatus for displaying a time code. The apparatus comprises a plurality of reflectors, each reflector being configured to reflect an incident signal, each reflector being switchable between a first state and a second state, and a controller configured to receive time code information and control, using the received time code information, each reflector to be in either its first or second state. In its first state, each reflector has a first orientation such that an incident signal is reflected in a first direction. In its second state, each reflector has a second orientation such that an incident signal is reflected in a second direction, the second orientation being different to the first orientation such that the second direction is different to the first direction.

The controller may control the reflectors to display the time code.

The plurality of reflectors may be configured to reflect an incident electromagnetic signal. The plurality of reflectors may be multi-spectral reflectors configured to reflect incident electromagnetic radiation within multiple different ranges of the electromagnetic spectrum.

The first state of each reflector may correspond to a first binary value. The second state of each reflector may correspond to a second binary value, the second binary value being different to the first binary value. The controller may be configured to, using the time code information, generate a binary signal and control the reflectors using the generated binary signal such that the time code information is displayed by the reflectors in binary form.

The time code information may be a Coordinated Universal Time signal. The controller may be configured to receive the time code information from a Global Positioning System satellite.

The apparatus may further comprise a plurality of emitters. Each emitter may be switchable between a first state and a second state. The controller may be further configured to control the emitters using the received time code information.

In some aspects, each emitter may emit a signal when in its first state, and does not emit a signal when in its second state.

In a further aspect, the present invention provides an imaging system comprising: apparatus for displaying a time code according to any of the above aspects; a signal source configured to transmit a signal to the plurality of reflectors; and a sensor configured to detect the signal reflected from the plurality of reflectors.

The imaging system may further comprise a further signal source configured to transmit a further signal to the plurality of reflectors, and a further sensor configured to detect the further signal reflected from the plurality of reflectors. The signal may be an electromagnetic signal. The further signal may be an electromagnetic signal within a different range of the electromagnetic spectrum to the range of the electromagnetic spectrum of the signal.

The imaging system may further comprise an emission sensor configured to detect a signal emitted by each of the emitters.

The imaging system may further comprise an image processor configured to process sensor measurements (e.g. an image) including generating, based on the time code information, a time-stamp for the sensor measurements, and configured to compare the sensor measurements to the time-stamp to determine a latency value.

The latency value may be a difference between a time indicated by the time-stamp and a time specified by the sensor measurements (i.e. a time displayed by the reflectors and/or the emitters).

The image processor may be further configured to process measurements taken by the further sensor including generating, based on the time code information, a further time-stamp for the further sensor measurements, and configured to compare the further sensor measurements to the further time-stamp to determine a further latency value.

The sensor may be further configured to image a target (for example a dynamic target such as an aircraft), thereby generating a target image. The image processor may be further configured to determine a time-stamp for the target image, and to modify, using the latency value, that time-stamp. The image processor may be configured to modify the time-stamp of the target image to reduce, by an amount equal to the latency value, the time specified by that time stamp.

In a further aspect, the present invention provides a method for displaying a time code. The method comprises: providing a plurality of reflectors, each reflector being configured to reflect an incident signal, each reflector being switchable between a first state and a second state; receiving, by a controller, time code information; and controlling, by the controller, using the received time code information, each reflector to be in either its first or second state. In its first state, each reflector has a first orientation such that an incident signal is reflected in a first direction. In its second state, each reflector has a second orientation such that an incident signal is reflected in a first direction, the second orientation being different to the first orientation such that the first direction is different to the second direction.

In a further aspect, the present invention provides a program or plurality of programs arranged such that when executed by a computer system or one or more processors it/they cause the computer system or the one or more processors to operate in accordance with the method of any preceding aspect.

In a further aspect, the present invention provides a machine readable storage medium storing a program or at least one of the plurality of programs according to the preceding aspect.

### BRIEF DESCRIPTION OF THE DRAWINGS

Figure 1 is a schematic illustration (not to scale) of scenario in which an embodiment of imaging system is implemented;
Figure 2 is a schematic illustration (not to scale) showing an imaging module;
Figure 3 is a schematic illustration (not to scale) showing a controller;
Figure 4 is a schematic illustration (not to scale) showing a time code display module;
Figure 5 is a schematic illustration (not to scale) showing a group of indicators of the time code display module;
Figure 6 is a process flow chart showing certain steps of a method of operation of the imaging system;
Figure 7 is a process flow chart showing certain steps of a method for calibrating the imaging module;
Figure 8 is a process flow chart showing certain steps of an aircraft imaging process; and
Figure 9 is a schematic illustration (not to scale) showing a further embodiment of an imaging system.

### DETAILED DESCRIPTION

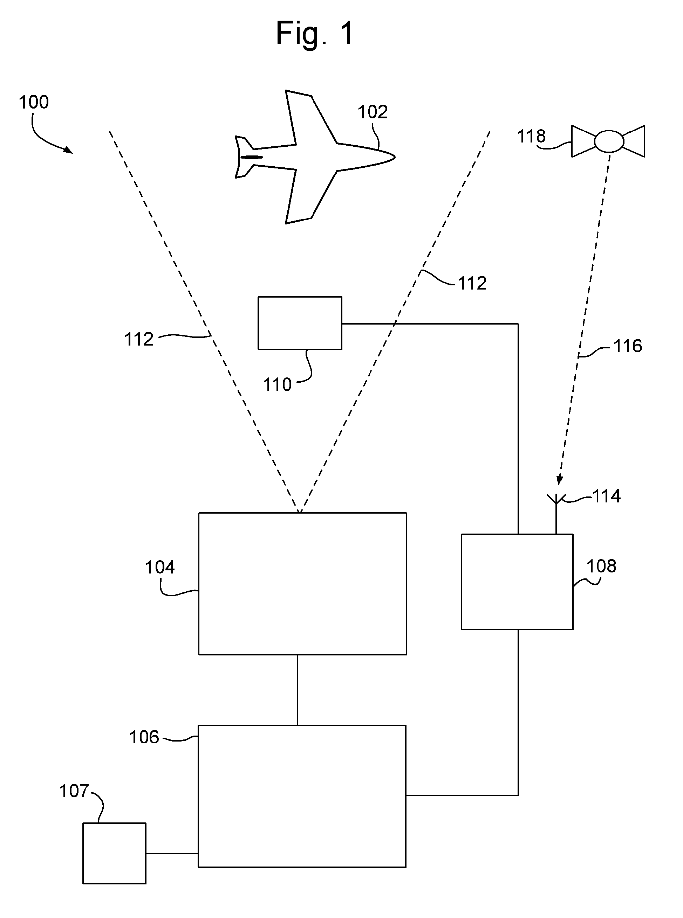

Figure 1 is a schematic illustration (not to scale) of scenario 100 in which an embodiment of imaging system is implemented.

In this embodiment, the imaging system comprises an imaging module 104, a processor 106, a memory 107, a controller 108, and a time code display module 110.

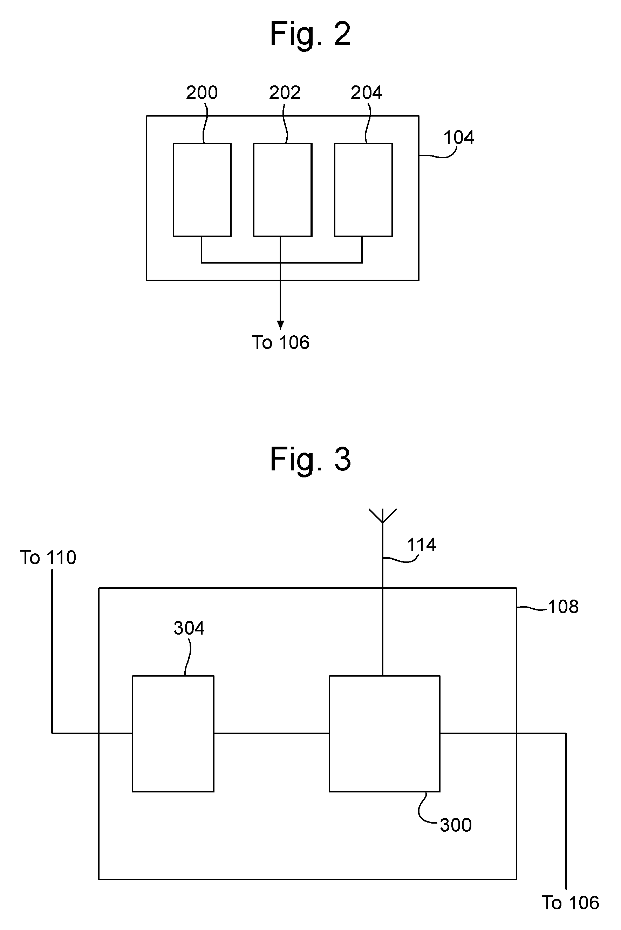

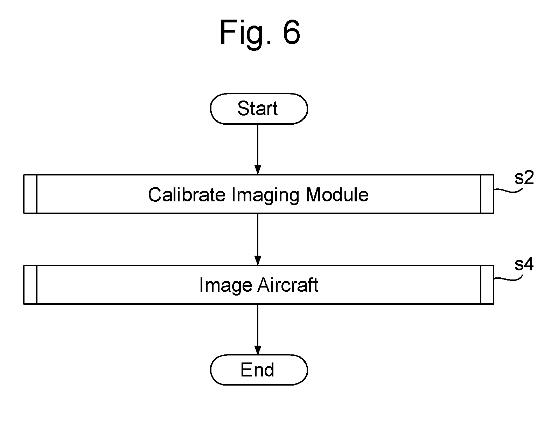

The imaging module 104 is described in more detail later below with reference to Figure 2. Operation of the imaging module 104 is described in more detail later below with reference to Figures 6 to 8.

In this embodiment, the imaging module 104 is configured to capture images of the aircraft 102 and/or the time code display module 110. A field of view of the imaging module 104 is indicated in Figure 1 by dotted lines and the reference numerals 112. The aircraft 102 and the time code display module 110 are within the field of view 112 of the imaging module 104.

In this embodiment, the imaging module 104 is connected to the processor 106 such that images captured by the imaging module 104 may be sent from the imaging module 104 to the processor 106.

In addition to being connected to the imaging module 104, the processor is connected to the controller 108 such that information may be sent between the processor 106 and the controller 108. As described in more detail later below with reference to Figures 6 to 8, the processor 106 is configured to process information received by it from the imaging module 104 and the controller 108.

The processor 106 is further connected to the memory 107 such that information may be sent between the processor 106 and the memory 107.

The memory 107 is configured to store information received from the processor 106. Also, the processor 106 may retrieve information stored in the memory 107.

The controller 108 is described in more detail later below with reference to Figure 3.

In addition to being connected to the processor 106, the controller 108 is connected to the time code display module 110. The controller 108 is configured to control the time code display module 110 as described in more detail later below with reference to Figures 6 to 8.

In this embodiment, the controller 108 is coupled to an antenna 114. The controller 108 is configured to receive, via the antenna 114, a Coordinated Universal Time (conventionally abbreviated as UTC) signal 116 from a Global Positioning System (GPS) satellite 118. The controller 108 is configured to process the UTC signal 116 as described in more detail later below with reference to Figures 6 to 8.

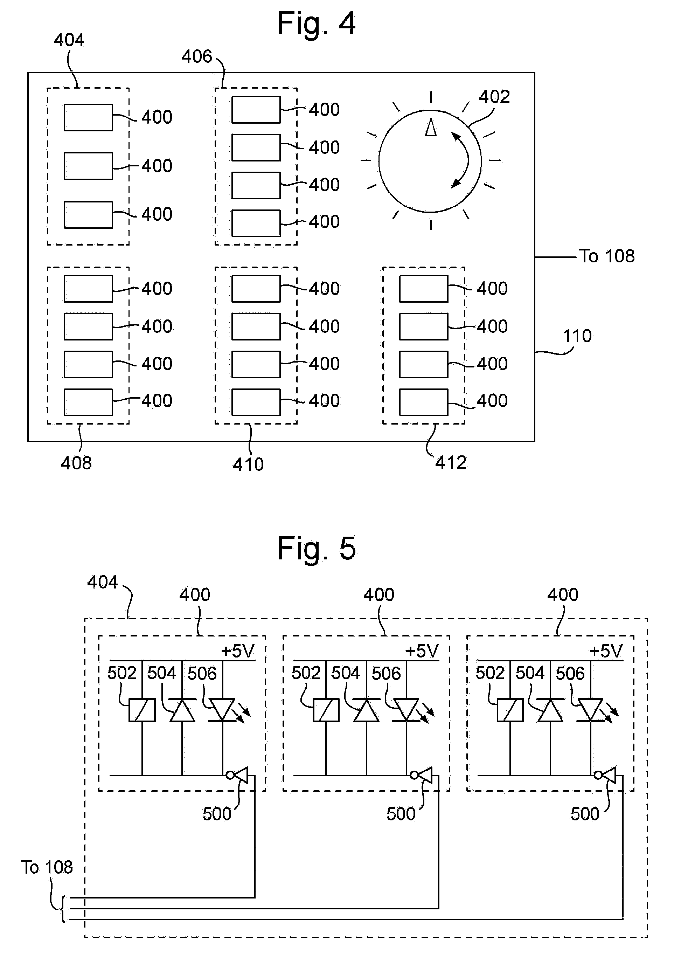

The time code display module 110 is described in more detail later below with reference to Figures 4 and 5. The time code display module 110 is configured to display a time code in a way that is visible in the images captured by the imaging module 104.

Figure 2 is a schematic illustration (not to scale) showing further details of the imaging module 104.

In this embodiment, the imaging module 104 comprises a visible-light detecting camera (hereinafter referred to as the "visible light camera" 200), an infrared (IR) radiation source 202, and an IR camera 204.

The visible light camera 200 is configured to capture visible light images of the aircraft 102 and/or the time code display module 110 as described in more detail later below with reference to Figure 6 to 8. In particular, the visible light camera 200 is configured to detect visible light reflected by the aircraft 102 to the visible light camera 200, and visible light reflected and emitted by the time code display module 110 to the visible light camera 200. The visible light camera 200 is connected to the processor 106 such that the visible light images captured by the visible light camera 200 may be sent from the visible light camera 200 to the processor 106.

The IR source 202 is configured to illuminate the time code display module 110 with infrared radiation.

The IR camera 204 is configured to capture IR images of the aircraft 102 and/or the time code display module 110 as described in more detail later below with reference to Figure 6 to 8. In particular, the IR camera 204 is configured to detect IR radiation emitted by the aircraft 102. Also, the IR camera 204 is configured to detect IR radiation that has been transmitted by the radiation source 202 to the time code display module 110 and then reflected by the time code display module 110 to the IR camera 204. The IR camera 204 is connected to the processor 106 such that the IR images captured by the IR camera 204 may be sent from the IR camera 204 to the processor 106.

Figure 3 is a schematic illustration (not to scale) showing further details of the controller 108.

In this embodiment, the controller 108 comprises the antenna 114, a time code unit (TCU) 300 and a binary coded decimal (BCD) output module 304.

As mentioned earlier above, the antenna 114 is configured to receive the UTC signal 116 from the GPS satellite 118. The antenna 114 is connected to the TCU 300 such that the UTC signal 116 may be sent from the antenna 114 to the TCU 300.

Operation of the TCU 300 is described in more detail later below with reference to Figures 6 to 8. In this embodiment, the TCU 300 is or includes a clock that is synchronised with UTC via a GPS receiver and the antenna 114.

In this embodiment, in addition to being connected to the antenna 114, the TCU 300 is connected to the BCD output module 304, and the processor 106 such that a signal may be sent between the TCU 300 and each of the BCD output module 304 and the processor 106.

Operation of the BCD output module 304 is described in more detail later below with reference to Figures 6 to 8.

In this embodiment, the BCD output module 304 is configured to generate a control signal for controlling the time code display module 110. In addition to being connected to the TCU 300, the BCD output module 304 is connected to the time code display module 110 such that a signal may be sent between the BCD output module 304 and the time code display module 110.

Figure 4 is a schematic illustration (not to scale) showing further details of the time code display module 110.

In this embodiment, the time code display module 110 comprises a plurality of indicators 400 and a rotatable disc 402.

The indicators 400 are described in more detail later below with reference to Figure 5. In this embodiment, each indicator 400 is a binary coded decimal indicator. Each indicator is configured to display a "0" or a "1". The indicators 400 are driven by a control signal received from the controller 108, as described in more detail later below with reference to Figures 5 to 8.

In this embodiment, the plurality of indicators 400 are arranged on a surface of the time code display module 110 in a plurality of groups, namely a first group 404, a second group 406, a third group 408, a fourth group 410, and a fifth group 412.

In this embodiment, the first group 404 of indicators 400 comprises three indicators 400. The three indicators 400 of the first group 404 are representative of the numbers 1, 2, and 4 respectively. In this embodiment, the three indicators 400 of the first group 404 are configured to display the numbers 0 to 5 in binary coded decimal form, i.e. 000, 001, 010, 011, 100, 101.

In this embodiment, the first group 404 of indicators represent multiples of 10 seconds. Thus, the three indicators 400 of the first group 404 are configured to display 0s, 10s, 20s, 30s, 40s, and 50s.

In this embodiment, the second group 406 of indicators 400 comprises four indicators 400. The four indicators 400 of the second group 406 are representative of the numbers 1, 2, 4, and 8 respectively. In this embodiment, the four indicators 400 of the second group 406 are configured to display the numbers 0 to 9 in binary coded decimal form, i.e. 0000, 0001, 0010, 0011, 0100, 0101, 0110, 0111, 1000, 1001.

In this embodiment, the second group 406 of indicators represent multiples of 1 second. Thus, the three indicators 400 of the second group 406 are configured to display 0s, 1 s, 2s, ..., 9s.

In this embodiment, the third group 408 of indicators 400 comprises four indicators 400. The four indicators 400 of the third group 408 are representative of the numbers 1, 2, 4, and 8 respectively. In this embodiment, the four indicators 400 of the third group 408 are configured to display the numbers 0 to 9 in binary coded decimal form, i.e. 0000, 0001, 0010, 0011, 0100, 0101, 0110, 0111, 1000, 1001.

In this embodiment, the third group 408 of indicators represent multiples of 0.1 second. Thus, the three indicators 400 of the third group 408 are configured to display 0.0s, 0.1s, 0.2s, ..., 0.9s.

In this embodiment, the fourth group 410 of indicators 400 comprises four indicators 400. The four indicators 400 of the fourth group 410 are representative of the numbers 1, 2, 4, and 8 respectively. In this embodiment, the four indicators 400 of the fourth group 410 are configured to display the numbers 0 to 9 in binary coded decimal form, i.e. 0000, 0001, 0010, 0011, 0100, 0101, 0110, 0111, 1000, 1001.

In this embodiment, the fourth group 410 of indicators represent multiples of 0.01 second. Thus, the three indicators 400 of the fourth group 410 are configured to display 0.00s, 0.01 s, 0.02s, ..., 0.09s.

In this embodiment, the fifth group 412 of indicators 400 comprises four indicators 400. The four indicators 400 of the fifth group 412 are representative of the numbers 1, 2, 4, and 8 respectively. In this embodiment, the four indicators 400 of the fifth group 412 are configured to display the numbers 0 to 9 in binary coded decimal form, i.e. 0000, 0001, 0010, 0011, 0100, 0101, 0110, 0111, 1000, 1001.

In this embodiment, the fifth group 412 of indicators represent multiples of 0.001 second. Thus, the three indicators 400 of the fifth group 412 are configured to display 0.000s, 0.001 s, 0.002s, ..., 0.009s.

Thus, in combination, the groups 404-412 of indicators 400 may display, in increments of 1/1000^{th} of a second, a range of times form 0.000s to 59.999s, i.e. 0.000s, 0.001s, 0.002s, ..., 59.998s, 59.999s.

The functionality of the disc 402 is described in more detail later below with reference to Figures 6 to 8. In this embodiment, the disc 402 is configured to rotate about its central axis. Rotation speed of the disc 402 is controlled by the controller 108. The disc 402 may be rotated at a speed of, for example, one revolution every 1/1000^{th} of a second. The disc 402 is marked with a scale to facilitate determination of how much the disc 402 has rotated.

Figure 5 is a schematic illustration (not to scale) showing the first group 404.

For the sake of convenience, only the first group 404 is illustrated in Figure 5 and described in more detail below. It will be appreciated by the skilled person that the first group 404 is provided as an example of the groups 404-412 of indicators 400, and that the other groups 406 - 412 have corresponding features and operate in a corresponding fashion.

In this embodiment, the first group 404 comprises three indicators 400.

In this embodiment, each of the indicators 400 comprises a buffer chip 500, a relay 502, a diode 504, and a light emitting diode (LED) 506. For each indicator 400, the relay 502, the diode 504, and the LED 506 are connected together in parallel.

In this embodiment, an input of the buffer chip 500 is connected to the controller 108 such that, in operation, the buffer chip 500 receives a control signal from the controller 108. Also, an output of the buffer chip 500 is connected to an input of each of the relay 502, the diode 504, and the LED 506. The buffer chip 500 is configured to drive the relays 502 and the LEDs 506 of the indicators 400 in accordance with the received control signal. In particular, the buffer chip 500 controls the relays 502 and the LEDs 506 such that the relays 502 and the LEDs 506 of the indicators 400 display the binary coded decimal time code specified by the control signal.

In this embodiment, the buffer chip 500 drives the relays 502, diodes 504, and LEDs 506 of the indicators 400 by applying 5V across those components 502-506.

Each relay 502 is has two states, namely a first state and a second state. The first state of a relay 502 is an "ON" state corresponding to a binary value of 1. The second state of a relay 502 is an "OFF" state corresponding to a binary value of 0. Each relay 502 is configured to be switched between its states, i.e. from a first state to a second state and *vice versa.* In this embodiment, each relay 502 comprises a reflective plate that is configured to reflect incident infrared radiation. In its first state, a relay 502 is oriented such that the reflective plate of the relay 502 reflects infrared radiation received by the relay 502 from the IR source 202, back towards the IR camera 204. In its second state, a relay 502 is oriented such that the reflective plate of the relay 502 reflects infrared radiation received by the relay 502 from the IR source 202, away from the IR camera 204.

The diode 504 is a protection diode for the buffer chip 500 to prevent back-EMF from the relay coil damaging the buffer chip 500.

Each LED 506 is has two states, namely a first state and a second state. The first state of an LED 506 is an "ON" state corresponding to a binary value of 1. The second state of an LED 506 is an "OFF" state corresponding to a binary value of 0. Each LED 506 is configured to be switched between its states i.e. from a first state to a second state and *vice versa.* In this embodiment, in its first state, an LED 506 emits visible light towards the visible light camera 200. In its second state, an LED 506 does not emit visible light towards the visible light camera 200.

In this embodiment, for each indicator 400, the relay 502 and the LED 506 of that indicator 400 either both operate in their first states, or both operate in their second states. Thus, an indicator 400 is either ON or OFF.

In this embodiment, when the relay 502 and the LED 506 of an indicator are both operating in their first states (i.e. the relay 502 and the LED 506 are both ON), the indicator 400 is indicative of a binary value of 1. Similarly, when the relay 502 and the LED 506 of an indicator are both operating in their second states (i.e. the relay 502 and the LED 506 are both OFF), the indicator 400 is indicative of a binary value of 0. Thus, each indicator 400 is configured to display either a 1 or a 0 in two different electromagnetic wavelength ranges (i.e. infrared and visible light).

Thus, an imaging system is provided.

Apparatus, including the processor 106, for implementing the above arrangement, and performing the method steps to be described later below, may be provided by configuring or adapting any suitable apparatus, for example one or more computers or other processing apparatus or processors, and/or providing additional modules. The apparatus may comprise a computer, a network of computers, or one or more processors, for implementing instructions and using data, including instructions and data in the form of a computer program or plurality of computer programs stored in or on a machine readable storage medium such as computer memory, a computer disk, ROM, PROM etc., or any combination of these or other storage media.

What will now be described is an embodiment of a method of operation of the imaging system.

Figure 6 is a process flow chart showing certain steps of a method of operation of the imaging system.

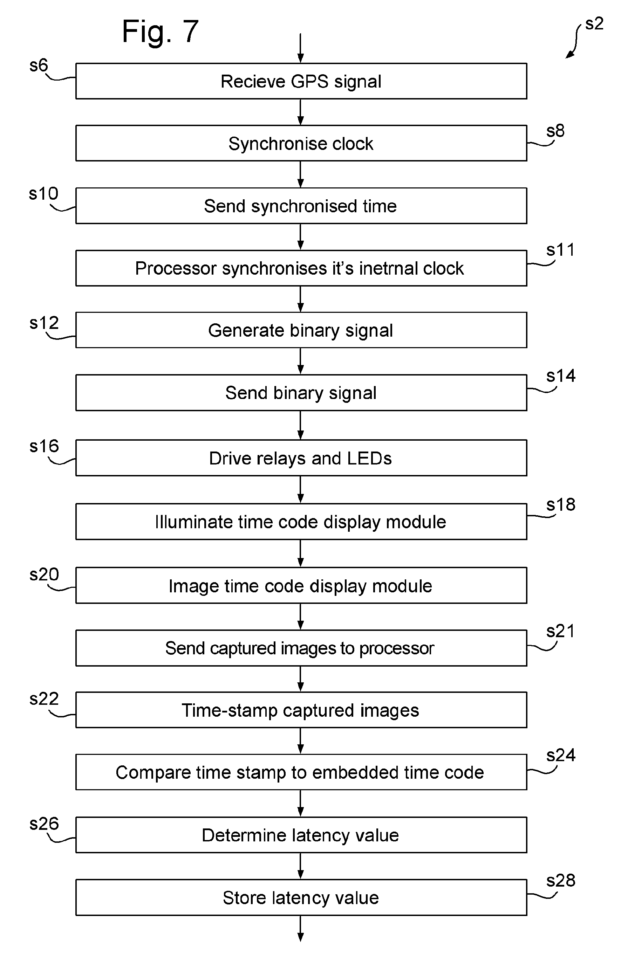

At step s2, the imaging module 104 is calibrated. A calibration method for calibrating the imaging module 104 is described in more detail later below with reference to Figure 7.

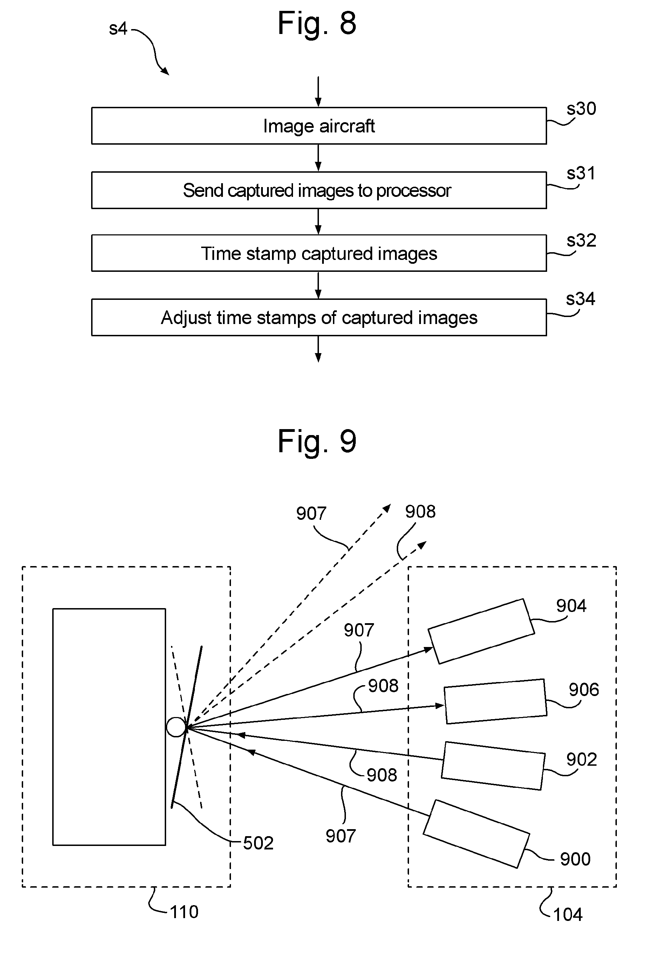

At step s4, the calibrated imaging module 104 captures images of the aircraft 102. An imaging method by which the imaging module 104 captures images of the aircraft 102 is described in more detail later below with reference to Figure 8.

Thus, a method of operation of the imaging system is provided.

Referring back to step s2 of the process of Figure 6, Figure 7 is a process flow chart showing certain steps of a calibration method for calibrating the imaging module 104.

At step s6, the TCU 300 of the controller 108 receives a UTC signal 116 from the GPS satellite 118. The TCU 300 receives the UTC signal via the antenna 114. The UTC signal 116 received by the TCU 300 specifies a Coordinated Universal Time, for example UT0, or UT1.

At step s8, the TCU 300 synchronises the clock 302 of the controller 308 with the received UTC signal 116.

At step s10, the TCU 300 sends a signal specifying the clock time (i.e. the time as recorded by the clock 302) to the BCD output module 304 and the processor 106. Thus, a signal specifying a time that is the same as the Coordinated Universal Time specified by the UTC signal 116 is sent to the BCD output module 304 and the processor 106.

At step s11, the processor 106 synchronises its internal clock with the signal received from the TCU 300, i.e. with the clock 302 of the controller 108.

At step s12, using the time signal received from the TCU 300, the BCD output module 304 generates a binary coded decimal signal. In this embodiment, the binary coded decimal signal generated by the BCD output module 304 specifies the 10s of seconds, 1s of seconds, 1/10^{ths} of a second, 1/100^{ths} of a second, and 1/1000^{ths} of a second of the time that is specified by the time signal received from the TCU 300, i.e. of the Coordinated Universal Time specified by the UTC signal 116.

At step s14, the BCD output module 304 sends the generated binary coded decimal signal to the buffer chips 500 of the indicators 400 of the time code display module 110.

At step s16, using the received binary coded decimal signal, the buffer chips 500 drive the indicators 400. In particular, the indicators 400 are driven such that the indicators 400 display (in binary coded decimal form) the time that is specified by the binary coded decimal signal, i.e. the Coordinated Universal Time specified by the UTC signal 116. In this embodiment, the buffer chips 500 drive the relays 502 and LEDs 506 to switch their states in order to display the time encoded in the binary coded decimal signal.

Thus, in this embodiment, the first group 404 of indicators 400 display, in binary coded decimal form, the 10s value of the time specified by the UTC signal 116. Similarly, the second group 406 of indicators 400 display, in binary coded decimal form, the 1 s value of the time specified by the UTC signal 116. Similarly, the third group 408 of indicators 400 display, in binary coded decimal form, the 0.1 s value of the time specified by the UTC signal 116. Similarly, the fourth group 410 of indicators 400 display, in binary coded decimal form, the 0.01 s value of the time specified by the UTC signal 116. Similarly, the fifth group 412 of indicators 400 display, in binary coded decimal form, the 0.001s value of the time specified by the UTC signal 116.

Thus, the states of the relays 502 and LEDs 506 of the indicators (i.e. ON/OFF or 1/0) represent, in binary coded decimal form, the 10s of seconds, 1s of seconds, 1/10^{ths} of a second, 1/100^{ths} of a second, and 1/1000^{ths} of a second of the Coordinated Universal Time specified by the UTC signal 116.

In some embodiments, the control signal generated by the BCD output module 504 specifies the 1/10,000^{ths} of a second of the Coordinated Universal Time specified by the UTC signal 116. In some embodiments, the controller 108 may be used to control the speed of the disc 402 such that a rotational position of the disc 402 corresponds to, and thereby permits determination of, the 0.0001 s value of the time specified by the UTC signal 116.

At step s18, the IR source 202 illuminates the time code display module 110 with IR radiation. In this embodiment, each of the relays 502 of the time code display module 110 that is in its first state (i.e. "ON" or 1) reflects the incident IR radiation back towards the IR camera 204. Also, each of the relays 502 of the time code display module 110 that is in its second state (i.e. "OFF" or 0) reflects the incident IR radiation away from the IR camera 204.

Also at s18, each of the LEDs 506 of the time code display module 110 that is in its first state (i.e. "ON" or 1) emits visible light back towards the visible light camera 200. Also, each of the LEDs 506 of the time code display module 110 that is in its second state (i.e. "OFF" or 0) does not emit visible light.

At step s20, the imaging module 104 captures images of the time code display unit 110.

In particular, the visible light camera 200 detects and captures an image of the light emitted by the LEDs 506 of the time code display module 110. Thus, the visible light camera 200 captures a visible light image showing (in visible light binary coded decimal form) the time specified in the binary coded decimal control signal. Also, the IR camera 204 detects and captures an image of the IR radiation reflected to the IR camera 204 by the relays 502 that are in their first state. Thus, the IR camera 204 captures an IR image showing (in IR binary coded decimal form) the time specified in the binary coded decimal control signal.

Thus, in this embodiment, a common time is displayed in visible light and IR images captured by the imaging module 104. This common time is hereinafter referred to as a "time code" that is embedded in the images.

At step s21, the imaging module 104 sends the captured images of the time code display unit 110 to the processor 106.

At step s22, the processor 106 processes the received images and, using the signal specifying the clock time received from the controller 108 at step s10, applies a time-stamp to the received images.

In this embodiment, the time-stamp applied to the images by the processor 106 is the time as recorded by the internal clock of the processor 106 (which was synchronised with the clock 302 of the controller 108 at step s11).

At step s24, the time code that is embedded in the captured visible light image (i.e. the time specified by the LEDs 506) is compared to the time-stamp that has been applied to the visible light image by the processor 106. Similarly, the time code that is embedded in the captured IR image (i.e. the time specified by the relays 502) is compared to the time-stamp that has been applied to the IR image by the processor 106.

In this embodiment, the time codes embedded in the visible light image and the IR image are the same. However, in other embodiments, the time codes embedded in the visible light image and the IR image are different.

In this embodiment, the time-stamps applied to the visible light image and the IR image are the same. However, in other embodiments, the time-stamps applied to the visible light image and the IR image are different, for example, because different the length of time the processor 106 takes to process the visible light image is different to the length of time the processor 106 takes to process the IR image.

In this embodiment, the comparison of the times codes embedded within the images with the time-stamps assigned to the images is performed by a human using a computer. However, in other embodiments, the comparison may be performed in a different way, for example, automatically by the processor 106.

At step s26, based on the comparison, a latency value is determined.

In this embodiment, the latency value is the difference between the time specified by the time codes embedded in the captured images and the time specified by the time-stamps assigned to the images.

Thus, the latency value tends to be indicative of an amount of time between the cameras 200, 204 of the imaging module 104 capturing the images of the time code display module 110 and the processor 106 applying the time-stamps to those captured images. In this embodiment, the latency value is between 0s and 59.999s.

At step s28, the processor 106 stores the determined latency value in the memory 107.

Thus, a calibration method is provided.

Referring back to step s4 of the process of Figure 6, Figure 8 is a process flow chart showing certain steps of an aircraft imaging process.

At step s30, the imaging module 104 captures images of the aircraft 102.

In particular, the visible light camera 200 detects and captures an image of visible light reflected by and/or emitted by the aircraft 102. Also, the IR camera 204 detects and captures an image of the IR radiation reflect by and/or emitted by the aircraft 102.

At step s31, the imaging module 104 sends the captured images of the aircraft 102 to the processor 106.

At step s32, the processor 106 processes the received aircraft images and applies a time-stamp to the received images. In this embodiment, the time-stamp applied to the aircraft images by the processor 106 is the time as recorded by the internal clock of the processor 106.

At step s34, the processor 106 adjusts the time-stamps that have been applied to the aircraft images using the latency value stored in the memory 107 at step s28. In particular, in this embodiment, the time-stamp applied to the images is reduced by an amount equal to the stored latency value.

Thus, the time stamps of the aircraft images are updated.

Thus, an aircraft imaging process is provided.

Many image sensors tend to perform "in-sensor" image processing prior to the captured image being relayed to computer that processes, applies a time-stamp, stores, and may display the images. Thus, a time-stamp applied to a captured image by an image processor may have a latency error due, at least in part, to the in-sensor processing, limitations of the device(s) that transfer the captured image from the image sensor to the image processor, and the speed/response time of the image processor. The above described method and apparatus advantageously tends to determine this latency. Furthermore, the above described method and apparatus tends to modify the image time-stamp to account for the determined latency.

Advantageously, the above described system tends to provide a common, consistent reference time code across multiple image spectrums. The common time code is displayed simultaneously as an image across each spectrum of interest. Each image frame captured by each spectral imaging device contains an absolute time code that is traceable to a common reference source.

Advantageously, the image capture systems (for example, the imaging sensors) may be operated normally and tend not to require modification.

The above described method and apparatus may be used to embed a time code in and image or images taken by a single imaging sensor, or an image or images taken by multiple imaging sensors, for example multiple imaging sensors configured to capture images in multiple different image spectra. Thus, latency of a single imaging sensor, or multiple imaging sensors may be determined and accounted.

When performing multi-spectral imaging of a dynamic object (such as the aircraft) or scene using multiple imaging devices, it tends to be important that image frames captured within an image spectrum can be correlated with images captured in each of the other spectra. This tends to ensure that comparisons between images in different spectra are made correctly between images taken at the same instant in time. Due to the different capture techniques and processing methods used by the different imaging spectra, the latency for images captured in each of the different imaging spectra tends to be different. The above described methods and system advantageously tends to enable multi-spectral latency measurement.

Furthermore, the above described system and method tends to facilitate evaluation of the image time-stamps against a universal time reference. This tends to facilitate correlation of the images with other recorded data (for example, aircraft data, such as aircraft manoeuvres or operations).

It should be noted that certain of the process steps depicted in the flowcharts of Figures 6 to 8 and described above may be omitted or such process steps may be performed in differing order to that presented above and shown in Figures 6 to 8. Furthermore, although all the process steps have, for convenience and ease of understanding, been depicted as discrete temporally-sequential steps, nevertheless some of the process steps may in fact be performed simultaneously or at least overlapping to some extent temporally.

In the above embodiments, the imaging system is implemented to capture images of the aircraft. However, in other embodiments, the imaging system is implemented to capture images of a different target instead of or in addition to the aircraft, for example, the time code display unit.

In the above embodiments, the imaging module includes a visible light camera and an IR camera, for imaging the target in multiple different spectra. However, in other embodiments the imaging module includes one or more different types of imaging sensor instead of or in addition to the visible light camera and/or the IR camera. Examples of different types of imaging sensors include, but are not limited to, ultraviolet (UV) cameras, radar imaging systems, sonar systems, and range imaging systems such as LIDAR systems. In some embodiments, the imaging module includes only a single imaging sensor, or a single type of imaging sensor.

In the above embodiments, the imaging module includes an IR source for illuminating the imaging target with IR radiation that is reflected by the target to the IR camera. In other embodiments, instead of or in addition to the IR source and IR camera, the imaging module includes a different type of radiation source for illuminating the target, and a different type of imaging sensor for detecting radiation reflected by the aircraft. In some embodiments, the imaging module does not include a radiation source corresponding to one or more of the imaging sensors of the imaging module, for example, an imaging sensor of the imaging module may detect only radiation that is emitted by the target, and not reflected by it. For example, in some embodiments, the IR source is omitted from the imaging module, and the IR camera detects IR radiation emitted by the aircraft, and not reflected by it.

In the above embodiments, for each imaging spectrum in which the target is being imaged, the time code display unit includes a respective set of reflectors or emitters for each of those different spectra. However, in other embodiments, a single set of reflectors and/or emitters reflects or emits in a plurality of different spectra.

Figure 9 is a schematic illustration (not to scale) showing a further embodiment of an imaging system including a further imaging module (which for convenience is indicated in Figure 9 using the same reference numeral as the imaging module above, i.e. 104), and a further time code display module (which for convenience is indicated in Figure 9 using the same reference numeral as the time code display module above, i.e. 110).

In this embodiment, the further imaging module 104 comprises a first radiation source 900, a second radiation source 902, a first imaging sensor 904, and a second imaging sensor 906.

For convenience and ease of understanding, the further time code display module 110 is shown in Figure 9 as only including a single relay 502. However, it will be understood that the further time code display module 110 may include one or more additional relays 502, and/or one or more different types of reflectors or emitters, such as LEDs.

The first radiation source 900 is configured to transmit a first type of radiation 907 onto the relay 502 of the time code display module 110. The first radiation source 900 may, for example, be an IR source configured to illuminate the relay 502 with IR radiation.

The first imaging sensor 904 is configured to detect the first type of radiation 907.

The second radiation source 902 is configured to transmit a second type of radiation 908 onto the relay 502 of the time code display module 110. The second radiation source 902 may, for example, be an UV source configured to illuminate the relay 502 with UV radiation.

The second imaging sensor 906 is configured to detect the second type of radiation 908.

In this embodiment, the relay 502 is has two states, namely a first state and a second state. The first state of the relay 502 is an "ON" state corresponding to a binary value of 1. The second state of the relay 502 is an "OFF" state corresponding to a binary value of 0. The relay 502 is configured to be switched between its states, i.e. from a first state to a second state and *vice versa*.

In this embodiment, the relay 502 comprises a reflective plate that is configured to reflect incident first and second types of radiation 907, 908.

In its first state, the relay 502 is oriented such that the reflective plate of the relay 502 reflects the first radiation 907 received by the relay 502 from the first radiation source 900, back towards the first imaging sensor 904, and also, simultaneously, reflects the second radiation 908 received by the relay 502 from the second radiation source 902, back towards the second imaging sensor 906. This reflection of the first and second radiation 907, 908 are indicated in Figure 9 by solid arrows.

In its second state, the relay 502 is oriented such that the reflective plate of the relay 502 reflects both the incident first radiation 907 and the incident second radiation 908 away from the first imaging sensor 904 and the second imaging sensor 906 respectively. This reflection of the first and second radiation 907, 908 are indicated in Figure 9 by dotted arrows.

Thus, a single set of reflectors and/or emitters may reflect or emit radiation in a plurality of different spectra. Advantageously, wide spectrum reflectors may be used to reflect energy sources covering the multiple spectra. The orientations of the reflector may be electrically controlled so that the source energy is either reflected directly towards the imaging devices or away from the imaging devices.

In the above embodiments, the time code display module comprises LEDs for emitting light indicative of a time code. The LEDs are switched between ON and OFF states so as to display the time code. However, in other embodiments, the time code may comprise one or more different types of emitter instead of or in addition to one or more of the LEDs. Also, in other embodiments, the emitters are not switched on/off to display the time code. For example, in some embodiments shutters in front of a spectral source (i.e. an emitter or reflector) may be controlled to permit/block passage of emission to display the time code. Also, in other embodiments, the intensity of the emitters may be controlled (e.g. by dimming/brightening the emitters) to display the time code display.

In the above embodiments, the determined latency value is used to modify time-stamps that have been applied to captured images. However, in other embodiments determined latency value(s) are not used to modify time-stamps that have been applied to captured images. In some embodiments, a latency value is used, for example by the processor using its internal clock, to determine an improved time-stamp prior to that improved time-stamp being applied to an image.

In the above embodiments, a time code is displayed by the time code display module in binary coded decimal form. However, in other embodiments, a time code is displayed by the time code display module in a different form instead of or in addition to binary coded decimal form.

In the above embodiments, a reference time code is supplied as a UTC signal that is received by the controller from a GPS satellite. However, in other embodiments a reference time code is supplied in a different form and/or by a different entity.

In the above embodiments, the imaging system is capable of displaying and determining latency values up to and including 59.999s. However, in other embodiments, the imaging system may be used to determine latency values in a different time range. Also, in other embodiments, the imaging system may be used to determine latency value to a different degree of accuracy, for example, to the nearest second as opposed to the nearest 1/1000^{th} or 1/10000^{th} of a second.

In some embodiments, the accuracy to which latency may be determined may be limited by the switching speed of the relays. However, alternative controllable reflectors may be used instead of or in addition to the relays to permit operation at higher speeds. Examples, of other reflectors that may be used include, but are not limited to, electronic shutters, galvanometers, and digital micro-mirror devices.

In the above embodiments, the time code display module is remote from the imaging system. The time code display module is placed in the field of view of the imaging sensors of the imaging module. However, in other embodiments, the time code display module may be integral to one or more imaging sensors. The time code display module may be integral to an imaging sensor such that each image captured by that imaging sensor contains a sub-image of the time-code display module, and thus has embedded therein a time code.

In the above embodiments, the time code display module is used to calibrate, or determine a latency for, the image module prior to the imaging module imaging a dynamic target of interest (i.e. the aircraft). However, in other embodiments, the time code display module is not used to calibrate the image module prior to the imaging of the target. For example, in some embodiments, the aircraft and the time code display module may be imaged at the same time. Thus, time codes may be embedded within the images of the target of interest. In some embodiments, the time code display module is imaged after the target of interest has been imaged. In such embodiments, determined latency values may be used to modify time-stamps that have been applied to the images of the target of interest captured prior to the calibration process being performed.

## Claims

1. Apparatus for displaying a time code, the apparatus comprising:
a plurality of reflectors (502), each reflector (502) being configured to reflect an incident signal (907, 908), each reflector (502) being switchable between a first state and a second state; and
a controller (108) configured to receive time code information and control the reflectors (502) using the received time code information; wherein
in its first state, each reflector (502) has a first orientation such that an incident signal (907, 908) is reflected in a first direction; and
in its second state, each reflector (502) has a second orientation such that an incident signal (907, 908) is reflected in a second direction, the second orientation being different to the first orientation such that the second direction is different to the first direction.

2. Apparatus according to claim 1, wherein the plurality of reflectors (502) are configured to reflect an incident electromagnetic signal.

3. Apparatus according to claim 2, wherein the plurality of reflectors (502) are multi-spectral reflectors (502) configured to reflect incident electromagnetic radiation within multiple different ranges of the electromagnetic spectrum.

4. Apparatus according to any of claims 1 to 3, wherein:
the first state of each reflector (502) corresponds to a first binary value;
the second state of each reflector (502) corresponds to a second binary value, the second binary value being different to the first binary value;
the controller (108) is configured to, using the time code information, generate a binary signal and control the reflectors (502) using the generated binary signal such that the time code information is displayed by the reflectors (502) in binary form.

5. Apparatus according to any of claims 1 to 4, wherein the time code information is a Coordinated Universal Time signal, and the controller (108) is configured to receive the time code information from a Global Positioning System satellite (118).

6. Apparatus according to any of claims 1 to 5, wherein:
the apparatus further comprises a plurality of emitters (506), each emitter (506) being switchable between a first state and a second state;
the controller (108) is further configured to control the emitters (506) using the received time code information;
in its first state, each emitter (506) emits a signal;
in its second state, each emitter (506) does not emit the signal.

7. An imaging system comprising:
apparatus for displaying a time code, the apparatus being in accordance with any of claims 1 to 6;
a signal source (202, 900) configured to transmit a signal (907) to the plurality of reflectors (502); and
a sensor (204, 904) configured to detect the signal (907) reflected from the plurality of reflectors (502).

8. An imaging system according to claim 7, wherein:
the imaging system further comprises:
a further signal source (902) configured to transmit a further signal (908) to the plurality of reflectors (502); and
a further sensor (906) configured to detect the further signal (908) reflected from the plurality of reflectors (502);
the signal (907) is an electromagnetic signal; and
the further signal (908) is an electromagnetic signal within a different range of the electromagnetic spectrum to the range of the electromagnetic spectrum of the signal (907).

9. An imaging system according to claim 7 or 8, wherein:
the apparatus for displaying a time code is dependent on claim 6; and
the imaging system further comprises an emission sensor (200) configured to detect a signal emitted by each of the emitters (506).

10. An imaging system according to any of claims 7 to 9, wherein the imaging system further comprises an image processor (106) configured to process sensor measurements including generating, based on the time code information, a time-stamp for the sensor measurements, and configured to compare the sensor measurements to the time-stamp to determine a latency value.

11. An imaging system according to claim 10, wherein the latency value is a difference between a time indicated by the time-stamp and a time specified by the sensor measurements.

12. An imaging system according to claim 10 or 11 when dependent on claim 8, wherein the image processor (106) is further configured to process measurements taken by the further sensor (906) including generating, based on the time code information, a further time-stamp for the further sensor measurements, and configured to compare the further sensor measurements to the further time-stamp to determine a further latency value.

13. An imaging system according to any of claims 10 to 12, wherein
the sensor (204, 904) is further configured to image a target (102), thereby generating a target image;
the image processor (106) is further configured to determine a time-stamp for the target image, and to modify, using the latency value, that time-stamp.

14. An imaging system according to claim 13, wherein the image processor (106) is configured to modify the time-stamp of the target image to reduce, by an amount equal to the latency value, the time specified by that time stamp.

15. A method for displaying a time code, the method comprising:
providing a plurality of reflectors (502), each reflector (502) being configured to reflect an incident signal (907, 908), each reflector (502) being switchable between a first state and a second state; and
receiving, by a controller (108), time code information; and
controlling, by the controller (108), the reflectors (502) using the received time code information; wherein
in its first state, each reflector (502) has a first orientation such that an incident signal (907, 908) is reflected in a first direction; and
in its second state, each reflector (502) has a second orientation such that an incident signal (907, 908) is reflected in a first direction, the second orientation being different to the first orientation such that the first direction is different to the second direction.
